(19) Europäisches Patentamt

European Patent Office

Office européen des brevets

(11) **EP 0 905 676 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(51) Int Cl.7: **G10K 9/12**, B06B 1/06

(21) Anmeldenummer: **98117957.5**

(22) Anmeldetag: **22.09.1998**

(54) **Sendeantenne für eine Sonaranlage**

Transmitting antenna for sonar apparatus

Antenne d'émission pour un dispositif sonar

(84) Benannte Vertragsstaaten:
**FR GB NL**

(30) Priorität: **26.09.1997 DE 19743096**

(43) Veröffentlichungstag der Anmeldung:
**31.03.1999 Patentblatt 1999/13**

(73) Patentinhaber: **ATLAS ELEKTRONIK GmbH
28305 Bremen (DE)**

(72) Erfinder: **Arens, Egidius
28832 Achim (DE)**

(56) Entgegenhaltungen:
| | |
|---|---|
| EP-A- 0 251 797 | EP-A- 0 494 480 |
| EP-A- 0 793 217 | AU-A- 4 051 895 |
| US-A- 4 546 459 | US-A- 5 099 460 |
| US-A- 5 345 428 | |

**Beschreibung**

Die Erfindung betrifft eine Sendeantenne für eine Sonaranlage zum Nachschleppen hinter einem Wasserfahrzeug, der im Oberbegriff des Anspruchs 1 definierten Gattung.

Zum Bestimmen von Peilung, Entfernung, Geschwindigkeit und Kurs eines Ziels werden von der Sendeantenne der Sonaranlage breitbandig Schallimpulse ausgesendet, die am Ziel reflektiert und von einer Schleppantenne winkelselektiv empfangen werden. Die Sendeantenne ist auf einem separaten Schleppkörper installiert. Zum Erzielen hoher Reichweiten liegt der Frequenzbereich der Schallwellen im Kilohertz-Bereich.

In "Underwater Updates" aus "Navy International" Mai/Juni 1993, Seite 140,141 ist ein Schleppkörper für eine Sendeantenne beschrieben, der einen Hohlzylinder mit elliptischem oder tropfenförmigem Querschnitt aufweist und an der Rückseite in Schlepplage am oberen Ende zwei seitlich wegstrebende Flügel zur Stabilisierung seiner Schlepplage trägt. Über eine Gabel ist der Schleppkörper mit Schlepp- und Zugkabel zum Wasserfahrzeug verbunden. Der Schleppkörper hat ein relativ großes Gewicht, um die geforderte Schlepptiefe zu erreichen. Zum Ausbringen und Einholen des Schleppkörpers und der Schleppantenne vom Wasserfahrzeug aus ist an Bord eine Verbringeinrichtung vorhanden, die eine Winde mit einer Windentrommel für das Zugkabel, eine weitere Windentrommel für die Schleppantenne und eine Versatzvorrichtung für Schleppkörper und Schleppantenne aufweist. Das Ausbringen und Einholen von Schleppantenne und Schleppkörper erfolgt getrennt. Der Schleppkörper weist auch bei strömungsgünstiger Form einen relativ großen Wasserwiderstand auf und benötigt an Deck des Wasserfahrzeugs zusammen mit der Verbringeinrichtung Raum zum Unterbringen, der insbesondere bei kleineren Schiffen, wie Korvetten zu erheblichen Platzproblemen führt.

In der australischen Patentanmeldung AU-B-4051895 ist eine Schleppantenne beschrieben, deren elektroakustische Wandler einen Hohlzylinder aus polarisierter Piezokeramik mit konkaver Innenschalung und konvexer Außenschalung enthalten. Die Innenschalung ist auf die innere Oberfläche und die Außenschalung auf die äußere Oberfläche des Hohlzylinders geklebt. Diese Wandler sind besonders für den Empfang von Schallwellen geeignet. Beim Einsatz als Sendewandler insbesondere hoher Schallpegel besteht jedoch die Gefahr, daß die Klebeverbindung durch die großen Hübe der Innen- und Außenschalung reißt.

Aus der EP 0 251 797 ist bereits ein zylindrischer Sendewandler bekannt, der bei 15 kHz sendet. Er weist eine Außenschalung und Abdeckung auf, die innig mit dem Hohlzylinder aus Piezokeramik verbunden sind. Mit diesem Sendewandler wird eine relative Bandbreite von 40 % erreicht. Niederfrequente Schallwellen von z.B. 1,5 kHz können mit diesem Sendewandler nicht abgestrahlt werden, da der Keramikzylinder nicht einen 10fachen Hub ausführen kann, der für die gleiche Abstrahlleistung wie bei 15 kHz erforderlich wäre.

Aus der (EP 0 494 480 A1) ist ein seismischer Sendewandler zur Erzeugung von Kompressions- oder Druckwellen oder von Scherwellen im Erdreich bekannt, der einen Stapel aus piezoelektrischen oder magnetostriktiven Elementen, einem sog. Piezostack, aufweist, der von einem Hohlzylinder aus Metall oder Keramik mit Radialabstand umschlossen ist. Der Piezostack stützt sich stirnseitig an zwei massiven Abdeckplatten ab, die den Hohlzylinder stirnseitig abschließen und zwischen sich axial einspannen. Bei Aktivierung des Piezostacks erzeugt dessen Längenänderung über die Abdeckplatten am Hohlzylinder eine abwechselnd den Hohlzylinder zusammendrückende und dehnende Axialkraft. Dadurch baucht sich abwechselnd der Hohlzylinder nach außen aus und wölbt sich nach innen ein, wodurch Druckschwingungen in Radialrichtung erzeugt werden. Ein solcher Sendewandler kann nur ausreichend Wirkleistung abstrahlen und nicht nur Blindleistung erzeugen, wenn sein Durchmesser in der Größenordnung der Wellenlänge λ des abzustrahlenden Schalls liegt.

Der Erfindung liegt die Aufgabe zugrunde, eine Sendeantenne der eingangs genannten Art zu schaffen, deren Platzbedarf gering ist, die ein einfaches Aus- und Einbringen ermöglicht und durch ihren robusten Aufbau für Ortungen über große Entfernungen eingesetzt werden kann.

Die Aufgabe ist bei einer Sendeantenne der im Oberbegriff des Anspruchs 1 angegebenen Gattung erfindungsgemäß durch die Merkmale im Kennzeichenteil des Anspruchs 1 gelöst.

Jeder Sendewandler der Sendeantenne weist einen Hohlzylinder aus Piezokeramik mit einer konvexen Außenschalung und einer konkaven Innenschalung zwischen zwei Abdeckungen auf, der in seiner Höhe über die Abdeckungen mechanisch vorgespannt ist. Der Hohlzylinder ist auch aus piezokeramischen Scheiben aufzubauen oder aus Therphenol herzustellen. Außenschalung, Innenschalung und Abdeckungen bilden einen geschlossenen Hohlring, der den Hohlzylinder umgibt. In radialer Richtung sind zwischen Hohlzylinder und Außenschalung sowie zwischen Hohlzylinder und Innenschalung Hohlräume vorhanden. Beim Senden von Schallwellen werden radiale und/oder axiale Schwingungen des Hohlzylinders auf den ihn umgebenden Hohlring übertragen und im Verhältnis von Hohlringdicke zu seiner Höhe übersetzt. Die Hohlringdicke wird durch die Differenz zwischen den Durchmessern der Außenschalung und der Innenschalung bestimmt. Durch diesen Aufbau des Sendewandlers wird eine Bewegungstransformation durchgeführt, die eine Hubvergrößerung des Sendewandlers in radialer Richtung bei gleicher Abstrahlleistung gestattet und somit den Frequenzbereich zu niedrigen Frequenzen hin im gleichen Verhältnis vergrößert.

Der Vorteil der Sendeantenne gemäß Anspruch 1 besteht weiterhin darin, daß ihr Strömungswiderstand und Strömungsgeräusch längs der Sendeantenne gering sind, da ihr Durchmesser den Schleppantennen, sogenannten Thin-Line Streamer, die für den Empfang von tieffrequenten Schallwellen benutzt werden, angepaßt ist. Der besondere Vorteil der Sendeantenne gemäß Anspruch 1 besteht darin, daß die Sendewandler in einem Schlauch untergebracht sind, daß der Schlauch mit den Sendewandlern und die Schleppantenne mit der gleichen Verbringeinrichtung ausgebracht und eingezogen werden können und eine Schleppeinheit bilden, wobei ihr Sendeteil in Schleppschiffnähe und ihr Empfangsteil in großem Abstand dazu hinterhergeschleppt wird. Ein spezieller Schleppkörper für die Sendeantenne ist somit überflüssig geworden, ebenso eine getrennte mechanische Anbindung an das schleppende Wasserfahrzeug, und der Raumbedarf an Bord gering.

Die vorteilhafte Weiterbildung der Sendeantenne nach Anspruch 2, bei der die Höhe ein 10faches der Hohlringdicke beträgt, gibt die Dimensionierung eines Sendewandlers an, dessen Leistung über einen breiten Frequenzbereich von 1 kHz bis 10 kHz konstant ist und beispielsweise $10^4$ N/m$^2$ beträgt.

Die vorteilhafte Weiterbildung der erfindungsgemäßen Sendeantenne nach Anspruch 3 gestattet eine dünnwandige Ausführung des Hohlrings mit der durch elliptische Formgebung seines Querschnitts auch bei großen Schwingamplituden ein Knicken ausgeschlossen ist.

Die vorteilhafte Weiterbildung der erfindungsgemäßen Sendeantenne nach Anspruch 4 gestattet eine einfache Montage des Sendewandlers, dessen Vorspannung durch die Schraubverbindung einstellbar ist.

Gemäß der vorteilhaften Weiterbildung der erfindungsgemäßen Sendeantenne nach Anspruch 5 besteht der Hohlring aus Aluminium oder einer Aluminiumlegierung, um das Gewicht jedes Sendewandlers klein zu halten.

Durch die Füllung der Hohlräume des Hohlrings mit Schaumstoff oder Metallschaum gemäß den vorteilhaften Weiterbildungen der Sendeantenne nach den Ansprüchen 6 und 7 wird die Impedanz des Sendewandlers, die abhängig vom Verhältnis seines Durchmessers zur Wellenlänge ist, an den Wellenwiderstand des Wassers angepaßt und Auftrieb erzeugt.

Gemäß einer vorteilhaften Ausführungsform der Erfindung nach Anspruch 8, weist der Hohlring eine Ausgleichsöffnung zum Flüssigkeitsaustausch auf. Dadurch kann die Flüssigkeit in den Hohlraum im Innern des Hohlrings eindringen, wodurch einerseits die Kühlung des Sendewandlers verbessert und andererseits die Druckfestigkeit des Sendewandlers erhöht wird. Durch die Ausgleichsöffnung ist ein Druckausgleich innerhalb des Sendewandlers möglich, so daß der keramische Hohlzylinder bei allen Wassertiefen unabhängig von dem jeweils herrschenden statischen Druck dieselbe axiale Vorspannung erhält.

Gemäß der vorteilhaften Weiterbildung der erfindungsgemäßen Sendeantenne nach Anspruch 9 wird ein Gel in den Schlauch gefüllt, das beim Einfüllen flüssig ist und danach durch Abbinden in seinen geleeförmigen Zustand überführt wird. Der Vorteil der Verwendung von Gel anstelle von Öl besteht darin, daß bei Beschädigung des Schlauches keine Umweltverschmutzung durch auslaufendes Öl verursacht wird und das Gel selbstheilend wirkt.

Die Erfindung ist anhand eines Ausführungsbeispiels für eine Sendeantenne einer Sonaranlage zum Nachschleppen von einem Wassserfahrzeug näher beschrieben. Es zeigen:

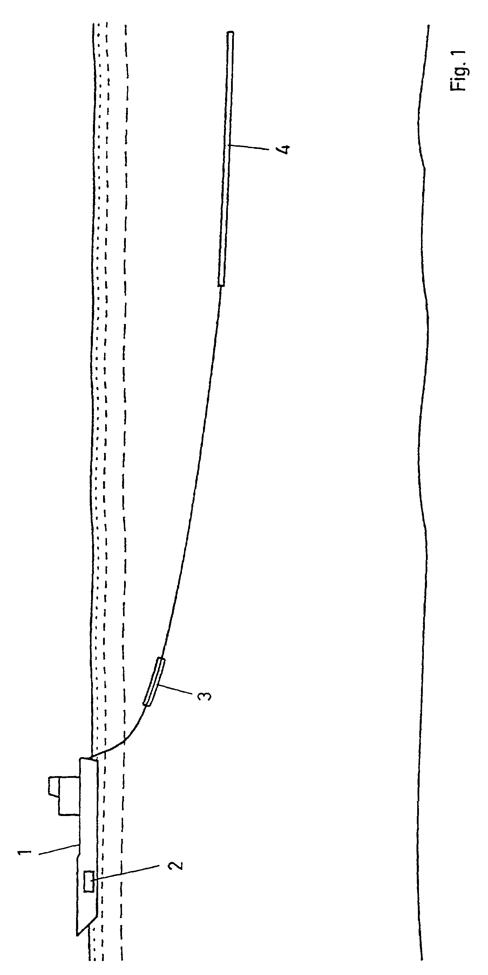

Fig.1    eine Sonaranlage mit Sendeantenne und Schleppantenne zum Empfangen,

Fig.2    einen Sendewandler und

Fig.3    eine Schnittdarstellung des Sendewandlers.

Auf einem Wasserfahrzeug 1 ist eine Sonaranlage 2 zum Bestimmen von Zieldaten eines Schiffs oder U-Boots installiert. Schallimpulse werden mit einer Sendeantenne 3 ausgesendet und reflektierte Anteile mit einer Schleppantenne 4 empfangen. Sendeantenne 3 und Schleppantenne 4 sind mit der Sonaranlage 2 verbunden. Von der Sonaranlage 2 mit ihren Antennen werden breitbandig Schallwellen in einem Frequenzbereich von 1 - 10 kHz gesendet und reflektierte Anteile empfangen und ausgewertet.

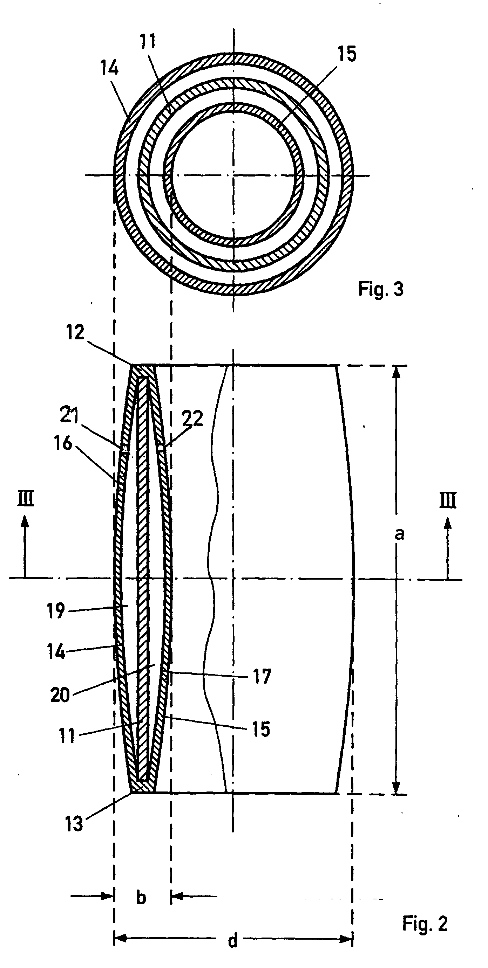

Die Sendeantenne 3 enthält in einem Schlauch mehrere zylindrische Sendewandler, deren Durchmesser wesentlich kleiner als ihre Länge ist. Der Durchmesser beträgt beispielsweise 7 cm, seine Länge ist ca. zehn mal so groß. Ein solcher Sendewandler ist in Fig.2 dargestellt. Die äußere Kontur des Sendewandlers ist tonnenförmig. Der akustisch aktive Teil ist ein Hohlzylinder 11 aus Piezokeramik oder einem Stapel von ringförmigen Scheiben aus Piezokeramik. Der Hohlzylinder 11 weist zum Aufbringen einer mechanischen Vorspannung ringförmige Abdeckungen 12, 13 auf. Eine nach außen gewölbte Außenschalung 14 mit konvex gekrümmter Wandung umgibt den Hohlzylinder 11. Eine Innenschalung 15 mit konkav gekrümmter Wandung befindet sich im Innenraum des Hohlzylinders 11. Die Außenschalung 14 und die Innenschalung 15 sind über die Abdeckungen 12, 13 verbunden und bilden einen Hohlring mit im wesentlichen elliptischem Querschnitt. Über eine Schraubverbindung 16, 17 wird die Vorspannung auf den Hohlzylinder 11 aufgebracht. Hohlräume 19, 20 des Hohlrings zwischen Außenschalung 14 und Hohlzylinder 11 sowie zwischen Innenschalung 15 und Hohlzylinder 11 sind mit Schaumstoff oder einem geschlossenporigen Metallschaum gefüllt, der auf den Hohlzylinder 11 galvanisiert wird, und dienen der Impedanzanpassung des Sendewandlers an den Wellenwiderstand Z des Wassers. Der Schlauch, der mehrere solcher Sendewandler aufnimmt, wird mit einem Gel gefüllt, das beim Einfließen dünnflüssig ist und nach einer gewissen Zeit nach dem Einfüllen abbindet. Ein solches Gel ist selbstheilend, wenn der Schlauch der Sendeantenne beschädigt wird.

Anstelle des Gels kann der Schlauch auch mit Öl oder anderen Flüssigkeiten gefüllt werden. Der Hohlring weist eine Ausgleichsöffnung zum Flüssigkeisaustausch auf, die eine in die Außenschalung 14 und eine in die Innenschalung 15 eingebrachte Durchgangsbohrung 21 bzw. 22 umfaßt.

Zum Senden von Schallwellen wird über Elektroden am Außenund Innenmantel des Hohlzylinders 11 eine sinusförmige Wechselspannung angelegt, die den Hohlzylinder 11 schwingen läßt und auch eine sinusförmige axiale Bewegung X ausführen läßt. Die axiale Bewegung X führt zu einer radialen Bewegung der Außenschalung 14 und Innenschalung 15 des Hohlringes, die im Verhältnis a zu b größer ist, wobei a die Höhe des Sendewandlers und b die Differenz der Durchmesser von Außenschalung und Innenschalung sind. Durch diese Bewegungstransformation ist es möglich, Schallwellen in einem breiten Frequenzbereich mit einem Hohlzylinder 11 aus Piezokeramik zu erzeugen, dessen Durchmesser wesentlich kleiner als die Wellenlänge der Schallwellen ist.

Bei einer abzustrahlenden Leistung N = 10 KW/m$^2$ beträgt die Amplitude des Schalldrucks im Wasser Po = $(Z \cdot N)^{1/2}$ = 1,2 $\square$ 10$^5$ Pa. Die Schallschnelle V ist über den Wellenwiderstand Z = 1,5•10$^6$ kg/m$^2$s des Wassers mit dem Schalldruck verknüpft und bestimmt sich aus der zeitlichen Ableitung der sinusförmigen Bewegung X. Ihre Amplitude ist von der Amplitude $X_o$ der Bewegung und der Frequenz $\omega$ abhängig. Um einen Schalldruck mit einer Amplitude $P_o$ = 1,2•10$^5$ Pa in Wasser zu erzeugen, beträgt die Amplitude der Bewegung im Wasser

$$x_o = \frac{P_o}{\omega \cdot Z}$$

$$x_o = \frac{1,2 \cdot 10^5}{1,5 \cdot 10^6} \cdot \frac{1}{2 \cdot \pi \cdot f} \qquad [m]$$

Bei einer Frequenz von f = 10 kHz beträgt die Amplitude $X_o$ = 1,2μm, bei einer Frequenz von 1 kHz beträgt die Amplitude $X_o$ = 12μm. Die Außenschalung 14 des Sendewandlers muß also frequenzabhängig eine Bewegung von 1μm bis 10μm ausführen, um breitbandig eine Leistung von 10 KW/m$^2$ abzustrahlen. Bei einem Verhältnis a:b = 10:1 wird eine Bewegungstransformation von 1:10 erreicht, d.h. eine axiale Bewegung X des Hohlzylinders 11 wird in eine radiale Bewegung r = 10$\square$X des Hohlringes transformiert.

Fig. 3 zeigt einen Schnitt durch den Sendewandler mit seiner Außenschalung 14, dem Hohlzylinder 11 und seiner Innenschalung 15 im Bereich des größten Durchmessers des Sendewandlers.

## Patentansprüche

1. Sendeantenne für eine Sonaranlage zum Nachschleppen hinter einem Wasserfahrzeug, mit mehreren, in einer Schleppkette angeordneten, zylindrischen Sendewandlern, deren Durchmesser (d) kleiner als die Wellenlänge ($\lambda$) des abzustrahlenden Schalls und deren Höhe (a) größer als ihr Durchmesser (d) ist und die jeweils einen Hohlzylinder (11) aus piezoelektrischem Material sowie eine den Hohlzylinder (11) mit Radialabstand außen umgebende, konvexe Außenschalung (14) aus Metall mit einer nach außen gewölbten Wandung und eine den Hohlzylinder (11) mit Radialabstand innen umgebende, konkave Innenschalung (15) aus Metall mit einer in den Innenraum des Hohlzylinders (11) gewölbten Wandung aufweisen, wobei der maximale Abstand (b) zwischen Außen- und Innenschalung (14, 15) wesentlich kleiner als die Höhe (a) des Hohlzylinders (11) ist, **dadurch gekennzeichnet, daß** der Hohlzylinder (11) in Richtung seiner Höhe (a) durch zwei auf je einer Stirnseite aufliegende, ringförmige Abdeckungen (12, 13) aus Metall, die mit der Außenschalung (14) und Innenschalung (15) einen die Zylinderwand des Hohlzylinders (11) umschließenden, sich in Umfangsrichtung des Hohlzylinders (11) erstreckenden, geschlossenen Hohlring bilden, mechanisch vorgespannt ist, und daß die Sendewandler in einem flüssigkeitsgefüllten Schlauch mit in axialer Längsrichtung des Schlauchs fluchtenden Höhenachsen aufgereiht sind.

2. Sendeantenne nach Anspruch 1, **dadurch gekennzeichnet, daß** die Höhe (a) ein 10faches der halben Differenz (b) beträgt.

3. Sendeantenne nach Anspruch 1 oder 2, **dadurch gekennzeichnet, daß** der Hohlring einen elliptischen Querschnitt aufweist.

4. Sendeantenne nach Anspruch 3, **dadurch gekennzeichnet, daß** der Hohlring teilbar ist und eine Schraubverbindung (16, 17) aufweist.

5. Sendeantenne nach einem der Ansprüche 1 bis 4, **dadurch gekennzeichnet, daß** der Hohlring aus Aluminium oder einer Aluminiumlegierung besteht.

6. Sendeantenne nach einem der Ansprüche 1 bis 5, **dadurch gekennzeichnet, daß** Hohlräume (19, 20) des Hohlrings zwischen seinen Wandungen und dem Hohlzylinder (11) mit einem elastischen Material gefüllt sind.

**7.** Sendeantenne nach Anspruch 6 **dadurch gekennzeichnet, daß** Hohlräume (19, 20) des Hohlrings zwischen seinen Wandungen und dem Hohlzylinder (11) mit geschlossenporigem Metallschaum gefüllt sind.

**8.** Sendeantenne nach einem der Ansprüche 1 bis 7, **dadurch gekennzeichnet, daß** der Hohlring eine Ausgleichsöffnung (21, 22) zum Flüssigkeitsaustausch aufweist.

**9.** Sendeantenne nach Anspruch 6, **dadurch gekennzeichnet, daß** die Flüssigkeit ein nach dem Einfüllen in den Schlauch abbindbares Gel ist.

**10.** Sendeantenne nach einem der Ansprüche 1 bis 9, **dadurch gekennzeichnet, daß** das piezoelektrische Material Piezokeramik oder Therphenol ist.

**11.** Sendeantenne nach einem der Ansprüche 1 bis 10, **dadurch gekennzeichnet, daß** der Hohlzylinder (11) aus ringförmigen Piezokeramikscheiben zusammengesetzt ist.

## Claims

**1.** Transmitting antenna for a sonar system for towing behind a watercraft, having two or more cylindrical transmitting transducers which are arranged in a tow chain and whose diameter (d) is less than the wavelength ($\lambda$) of the sound to be emitted and whose height (a) is greater than its diameter (d), and which each have a hollow cylinder (11) composed of piezoelectric material as well as a convex outer shell (14) composed of metal, which surrounds the hollow cylinder (11) with a radial gap on the outside and with a wall which is domed outwards, and a concave inner shell (15) composed of metal, which surrounds the hollow cylinder (11) with a radial gap on the inside and with a wall which is domed into the interior of the hollow cylinder (11), with the maximum distance (b) between the outer shell (14) and the inner shell (15) being significantly less than the height (a) of the hollow cylinder (11), **characterized in that** the hollow cylinder (11) is mechanically prestressed in the direction of its height (a) by two annular covers (12, 13), which each rest on one end face, are composed of metal and, together with the outer shell (14) and the inner shell (15), form a closed hollow ring which surrounds the cylindrical wall of the hollow cylinder (11) and extends in the circumferential direction of the hollow cylinder (11), and **in that** the transmitting transducers are arranged in a row in a liquid-filled flexible tube with height axes which are aligned in the axial longitudinal direction of the flexible tube.

**2.** Transmitting antenna according to Claim 1, **characterized in that** the height (a) is ten times half the difference (b).

**3.** Transmitting antenna according to Claim 1 or 2, **characterized in that** the hollow ring has an elliptical cross section.

**4.** Transmitting antenna according to Claim 3, **characterized in that** the hollow ring can be split and has a screw connection (16, 17).

**5.** Transmitting antenna according to one of Claims 1 to 4, **characterized in that** the hollow ring is composed of aluminium or of an aluminium alloy.

**6.** Transmitting antenna according to one of Claims 1 to 5, **characterized in that** cavities (19, 20) in the hollow ring between its walls and the hollow cylinder (11) are filled with an elastic material.

**7.** Transmitting antenna according to Claim 6, **characterized in that** cavities (19, 20) in the hollow ring between its walls and the hollow cylinder (11) are filled with closed-pore metal foam.

**8.** Transmitting antenna according to one of Claims 1 to 7, **characterized in that** the hollow ring has an equalization opening (21, 22) for liquid to flow through.

**9.** Transmitting antenna according to Claim 6, **characterized in that** the liquid is a gel which can be bound after being inserted into the flexible tube.

**10.** Transmitting antenna according to one of Claims 1 to 9, **characterized in that** the piezoelectric material is piezoceramic or therphenol.

**11.** Transmitting antenna according to one of Claims 1 to 10, **characterized in that** the hollow cylinder (11) is formed from annular piezoceramic discs.

## Revendications

**1.** Antenne d'émission pour un dispositif sonar à remorquer derrière un bateau, avec plusieurs transducteurs d'émission cylindriques, disposés en une chaîne remorquée, dont le diamètre (d) est plus petit que la longueur d'onde ($\lambda$) du son à émettre et dont la hauteur (a) est plus grande que leur diamètre (d) et qui présentent chacun un cylindre creux (11) en un matériau piézoélectrique ainsi qu'une gaine extérieure convexe (14) en métal entourant extérieurement le cylindre creux (11) à une distance radiale avec une paroi cintrée vers l'extérieur et une gaine intérieure concave (15) en métal entourant intérieurement le cylindre creux (11) à une distance radiale avec une paroi cintrée dans l'espace intérieur du cylindre creux (11), dans laquelle la distance maximale (b) entre la gaine extérieure et la gaine intérieure (14, 15) est sensiblement plus petite que la hauteur (a) du cylindre creux (11), **caractérisée en ce que** le cylindre creux (11) est précontraint mécaniquement dans le sens de sa hauteur (a) par deux couvercles annulaires (12, 13) en métal appliqués respectivement sur une face d'extrémité, qui forment avec la gaine extérieure (14) et la gaine intérieure (15) un anneau creux fermé, s'étendant dans le sens périphérique du cylindre creux (11) et entourant la paroi cylindrique du cylindre creux (11), et **en ce que** les transducteurs d'émission sont arrangés dans un tuyau souple rempli de liquide avec les axes de hauteur alignés selon la direction longitudinale du tuyau souple.

2. Antenne d'émission selon la revendication 1, **caractérisée en ce que** la hauteur (a) vaut 10 fois la demi-différence (b).

3. Antenne d'émission selon la revendication 1 ou 2, **caractérisée en ce que** l'anneau creux présente une section transversale elliptique.

4. Antenne d'émission selon la revendication 3, **caractérisée en ce que** l'anneau creux est divisible et présente un assemblage vissé (16, 17).

5. Antenne d'émission selon l'une quelconque des revendications 1 à 4, **caractérisée en ce que** l'anneau creux est composé d'aluminium ou d'un alliage d'aluminium.

6. Antenne d'émission selon l'une quelconque des revendications 1 à 5, **caractérisée en ce que** des espaces creux (19, 20) de l'anneau creux entre ses parois et le cylindre creux (11) sont remplis d'un matériau élastique.

7. Antenne d'émission selon la revendication 6, **caractérisée en ce que** des espaces creux (19, 20) de l'anneau creux entre ses parois et le cylindre creux (11) sont remplis d'un métal expansé à cellules fermées.

8. Antenne d'émission selon l'une quelconque des revendications 1 à 7, **caractérisée en ce que** l'anneau creux présente un orifice d'égalisation (21, 22) pour l'échange de liquide.

9. Antenne d'émission selon la revendication 6, **caractérisée en ce que** le liquide est un gel pouvant faire prise après son introduction dans le tuyau souple.

10. Antenne d'émission selon l'une quelconque des revendications 1 à 9, **caractérisée en ce que** le matériau piézoélectrique est une piézocéramique ou du therphénol.

11. Antenne d'émission selon l'une quelconque des revendications 1 à 10, **caractérisée en ce que** le cylindre creux (11) est composé de rondelles piézocéramiques annulaires.

Fig. 1

EP 0 905 676 B1

Fig. 3

Fig. 2